# EUROPEAN PATENT SPECIFICATION

(11) **EP 3 804 963 B1**
(45) Date of publication and mention of the grant of the patent: **21.01.2026**
(21) Application number: 18907484.2
(22) Date of filing: 17.07.2018
(51) Int. Cl.: B29C 64/153, B22F 3/105, B29C 64/321, B33Y 40/00, B22F 10/28, B22F 12/57, B22F 12/58, B22F 12/67, G01F 11/24, B29C 64/343, B33Y 30/00, B33Y 40/10

(54) **POWDER SPREADING APPARATUS AND PRINTER**
PULVERVERTEILUNGSVORRICHTUNG UND DRUCKER
APPAREIL D'ÉTALEMENT DE POUDRE ET IMPRIMANTE

(30) Priority: 30.05.2018 CN 201810542935
(43) Date of publication of application: 14.04.2021
(73) Proprietor: Guangdong Hanbang 3D Tech Co., Ltd., Guangdong 528427 (CN)
(72) Inventor: LIU, Jianye, Guangdong 528427 (CN); GAO, Wenhua, Guangdong 528427 (CN); XU, Kali, Guangdong 528427 (CN); NIU, Liuhui, Guangdong 528427 (CN); HU, Gaofeng, Guangdong 528427 (CN); ZHU, Haowei, Guangdong 528427 (CN); MAO, Li, Guangdong 528427 (CN)
(74) Representative: Zaboliene, Reda
(86) International application number: PCT/CN2018/096017
(87) International publication number: WO 2019/227626

(56) References cited:
- WO-A1-2010/007396
- WO-A1-2011/085946
- WO-A1-2015/082677
- CN-A- 107 031 046
- CN-A- 107 520 443
- CN-A- 107 855 526
- CN-A- 107 900 337
- CN-U- 206 392 864
- CN-U- 206 568 562
- CN-U- 206 568 562
- CN-U- 206 898 391
- CN-U- 206 898 391
- US-A1- 2016 009 027

## Description

### FIELD

The subject matter herein generally relates to laser forming technique, and particularly, to a powder spreading device of a 3D printer and a 3D printer.

### BACKGROUND

A 3D printer is a three-dimensional printer. The 3D printer employs rapid forming technique, bases on the digital model data, uses preformed powder made of metal or non-metal material, and melts the preformed powder layer by layer-to-layer, and solidifies additive deposition to form a three-dimensional physical model. A related 3D printer includes a powder spreading device and a laser. During 3D printing, after a preformed powder layer is sintered by the laser, the powder spreading device spreads the preformed powder, and continuing in this manner in order to sinter new preformed powder layer. A related powder spreading device can control a quantity of powder by controlling an incline angle of a powder spreading unit of the powder spreading device. Thus, an accuracy requirement of a structure of the powder spreading unit, such as a connection bearing, is higher. However, a mass of dust is generated during forming the physical model by the 3D printer, thus a forming box which the powder spreading device is at exists the mass of dust. The dust may easily enter into the structure of the powder spreading unit, such as the connection bearing, thus a powder spreading accuracy is lower.

CN206898391U relates to a three-dimensional object manufacturing device and a powder supply device thereof. A powder groove seat (1), a roller (2) that has a plurality of recesses, a scraper mechanism (3), and an interior baffle (4) are provided. The inner wall of powder groove seat (1) both sides inwards extends respectively so that the powder groove seat (1) inside forms first inner chamber and second inner chamber in proper order from top to down. An opening is formed between the first inner chamber and the second inner chamber. The roller (2) lies in the second intracavity. The roller (2) and the opening interference fit. The scraper mechanism (3) sets up in the second cavity. The interior baffle (4) is used for half to surround the scraper mechanism (3) and lie below the roller (2), and the interior baffle (4) forms a first passageway (37) and a second channel (38) respectively with the inner wall of the powder groove seat (1) both sides, so that the powder of storing in the first cavity falls from the first passageway (37) or the second channel (38) under the motion of roller (2). The scraper mechanism (3) includes two or more scrapers (31), and are configured to pave the powder felled from the first passageway (37) or the second channel (38) onto a work area. Thus, the three-dimensional body manufacture equipment and powder paving device thereof is not only simple structure, but also has improved work efficiency and three-dimensional body shaping quality.

### SUMMARY OF THE INVENTION

In view of the disadvantages in the prior art, the present disclosure provides a power spreading device and a printer capable of accurately control a quantity of powder during spreading.

A powder spreading device, the powder spreading device includes a forming box, an intermediate powder supply device, and a powder spreading unit. The intermediate powder supply device is fixed in the forming box. The intermediate powder supply device includes a powder supply base and a powder supply unit. The powder supply base defines a first powder inlet passage, a second powder inlet passage, a first powder outlet passage, a second powder outlet passage, and a first receiving space. The first powder inlet passage is configured to receive a first preformed powder. The second powder inlet passage is spaced from the first powder inlet passage. The second powder inlet passage is configured to receive a second preformed powder. The first powder outlet passage is configured to provide the first preformed powder to drop from the powder supply base. The second powder outlet passage is spaced from the first powder outlet passage. The second powder outlet passage is configured to provide the second preformed powder to drop from the powder supply base. The first receiving space is configured to receive the powder supply unit. The powder supply unit is configured to be driven one or more times to move along a first direction one or more times to transfer the first preformed powder from the first powder inlet passage to the first powder outlet passage, and be driven one or more times to move along a second direction one or more times to transfer the second preformed powder from the second powder inlet passage to the second powder outlet passage. The powder spreading unit is movably arranged in the forming box and below the intermediate powder supply device. The powder spreading unit includes a scraper. The scraper is configured to smooth the first preformed powder or the second preformed powder.

The disclosure controls the power supply unit to reciprocately move one or more times to more times add the fix quantity of the powder, thus a quantity of the powder during spreading can be accurately controlled, the disclosure controls the power supply unit to move along the first direction or the second direction to achieve to add the first preformed powder or the second preformed powder, the disclosure controls the power supply unit to move along the first direction or the second direction to achieve to add the powder, no need to accurately control a rotation angle of the power supply unit, thus an installation accuracy requirement of the powder spreading device can be reduced.

### BRIEF DESCRIPTION OF THE DRAWINGS

FIG. 1 is a schematic view of a powder spreading device of a first embodiment, where an intermediate powder supply device and a powder spreading unit of the powder spreading device being turn off.
FIG. 2A is a schematic view showing that a first receiving groove of the intermediate powder supply device of FIG. 1 and a first powder outlet passage of the intermediate powder supply device of FIG. 1 communicate with each other.
FIG. 2B is a schematic view showing that a second receiving groove of the intermediate powder supply device of FIG. 1 and a second powder outlet passage of the intermediate powder supply device of FIG. 1 communicate with each other.
FIG. 3A is a schematic view showing that a first powder storage passage of the powder spreading unit of FIG. 1 and a first powder feeding passage of the powder spreading unit of FIG. 1 communicate with each other.
FIG. 3B is a schematic view showing that a second powder storage passage of the powder spreading unit of FIG. 1 and a second powder feeding passage of the powder spreading unit of FIG. 1 communicate with each other.
FIG. 4 is a schematic view of a limiting unit and a powder supply unit of the powder spreading device of FIG. 1.
FIG. 5A is a schematic view showing that the limiting unit and a first triggering unit of the powder supply unit of FIG. 4 are in a trigger state.
FIG. 5B is a schematic view showing that the limiting unit and a first triggering unit of the powder supply unit of FIG. 4 are in an untriggered state.
FIG. 6 is a schematic view of a powder spreading device of a second embodiment, where an intermediate powder supply device and a powder spreading unit of the powder spreading device being turn off.
FIG. 7A is a schematic view showing that a first through hole of the intermediate powder supply device of FIG. 6 and a first powder outlet passage of the intermediate powder supply device of FIG. 6 communicate with each other.
FIG. 7B is a schematic view showing that a second through hole of the intermediate powder supply device of FIG. 6 and a second powder outlet passage of the intermediate powder supply device of FIG. 6 communicate with each other.
FIG. 8A is a schematic view showing that a first powder storage passage of the powder spreading unit of FIG. 6 and a first powder feeding passage of the powder spreading unit of FIG. 6 communicate with each other.
FIG. 8B is a schematic view showing that a second powder storage passage of the powder spreading unit of FIG. 6 and a second powder feeding passage of the powder spreading unit of FIG. 6 communicate with each other.
FIG. 9 is a schematic view of a printer omitting a part of structure.

### DETAILED DESCRIPTION

Clear and complete description will be given below to the technical proposals of the embodiments of the present disclosure with reference to the accompanying drawings of the embodiments of the present disclosure. It will be obvious to those skilled in the art that the preferred embodiments are only partial embodiments of the present disclosure but are not all the embodiments. All the other embodiments obtained by those skilled in the art without creative efforts on the basis of the illustrated embodiments of the present disclosure shall fall within the scope of protection of the present disclosure.

In the present disclosure, unless specified or limited otherwise, it is to be understood that terms such as "above," "under," "upper end," "lower end," "upper surface," "lower surface," "clockwise," "counterclockwise," "left," and "right," should be construed to refer to the orientation as then described or as shown in the drawings under discussion. These relative terms are for convenience of description and do not require that the device or element be constructed or operated in a particular orientation, shall not be construed to limit the present disclosure.

In the present disclosure, unless specified or limited otherwise, a structure in which a first feature is "on" or "below" a second feature may include an embodiment in which the first feature is in direct contact with the second feature, and may also include an embodiment in which the first feature and the second feature are not in direct contact with each other, but are contacted via an additional feature formed therebetween. Furthermore, a first feature "on," "below," or "on top of" a second feature may include an embodiment in which the first feature is right or obliquely "on," " below," or "on top of" the second feature, or just means that the first feature is at a height higher than that of the second feature; while a first feature "above," "under," or "on bottom of" a second feature may include an embodiment in which the first feature is right or obliquely " above," "under," or "on bottom of" the second feature, or just means that the first feature is at a height lower than that of the second feature.

In addition, terms such as "first" and "second" are used herein for purposes of description and are not intended to indicate or imply relative importance or significance or to imply the number of indicated technical features. Thus, the feature defined with "first" and "second" may comprise one or more of this feature.

In the present disclosure, unless specified or limited otherwise, the terms "coupled," "fixed" and the like are used broadly, and may be, for example, fixed connections, detachable connections, or integral connections; may also be mechanical or electrical connections; may also be direct connections or indirect connections via intervening structures; may also be inner communications of two elements, which can be understood by those skilled in the art according to specific situations, which can be understood by those skilled in the art according to specific situations.

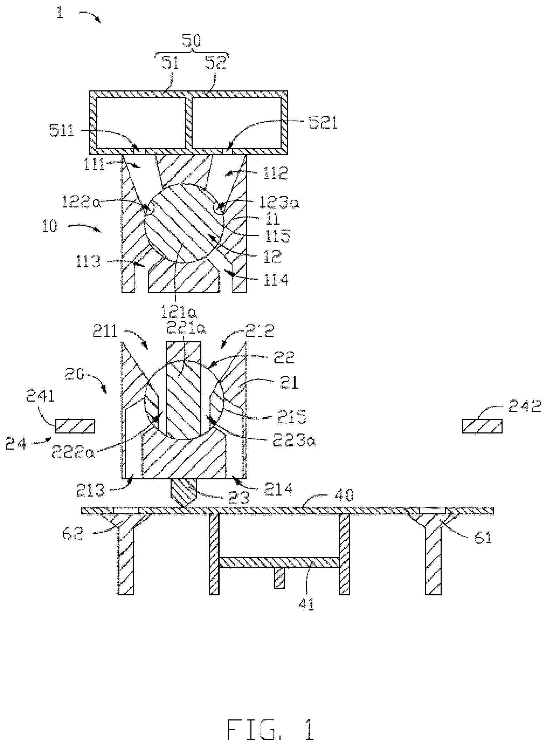

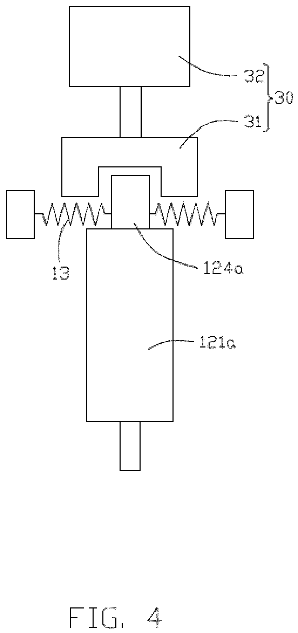

Referring to FIG. 1, FIG. 1 is a schematic view of a powder spreading device of a first embodiment, where an intermediate powder supply device and a powder spreading unit of the powder spreading device being turn off. The powder spreading device 1 includes a forming box, an intermediate powder supply device 10, a powder spreading unit 20, and a limiting unit 30 (as shown in FIG. 4). The forming box includes a forming zone 40. The intermediate powder supply device 10 is fixed in the forming box and above the forming zone 40. The intermediate powder supply device 10 is configured to be trigged by the limiting unit 30 to control a quantity of a first preformed powder and a second preformed powder dropped to the powder spreading unit 20. The powder spreading unit 20 is movably arranged in the forming box, below the intermediate powder supply device 10, and above the forming zone 40. The powder spreading unit 20 can bring the limiting unit 30 to move. The powder spreading unit 20 is configured to select the first preformed powder or the second preformed powder to drop onto the forming zone 40, and spread the powder onto the forming zone 40.

In the embodiment, the powder spreading device 1 further includes a powder storage box 50. The powder storage box 50 includes a first powder storage box 51 and a second powder storage box 52. The first powder storage box 51 and the second powder storage box 52 are above the intermediate powder supply device 10. The first powder storage box 51 is configured to receive the first preformed powder, and the second powder storage box 52 is configured to receive the second preformed powder. The material of the first preformed powder and the material of the second preformed powder can be same or different. In the embodiment, the material of the first preformed powder and the material of the second preformed powder can be different, for example the first preformed powder can be metal powder, and the second preformed powder can be ceramic powder. The first powder storage box 51 and the second powder storage box 52 are configured to provide powder for the intermediate powder supply device 10. The first powder storage box 51 and the second powder storage box 52 respectively define a first opening 511 and a second opening 521. In the embodiment, the first opening 511 and the second opening 521 are respectively formed at a lower surface of the first powder storage box 51 and the second powder storage box 52. In other embodiments, the first powder storage box 51 and the second powder storage box 52 can be external devices.

The intermediate powder supply device 10 includes a powder supply base 11, a powder supply unit 12, and a return member 13 (as shown in FIG. 4). The powder supply base 11 is below the first powder storage box 51 and the second powder storage box 52. The powder supply base 11 defines a first powder inlet passage 111, a second powder inlet passage 112, a first powder outlet passage 113, a second powder outlet passage 114, and a first receiving space 115. The first powder inlet passage 111 is communication with the first opening 511. The first powder inlet passage 111 is configured to receive the first preformed powder dropped from the first powder storage box 51. The second powder inlet passage 112 is spaced from the first powder inlet passage 111. The second powder inlet passage 112 is communication with the second opening 521. The second powder inlet passage 112 is configured to receive the second preformed powder dropped from the second powder storage box 52. In the embodiment, the first powder inlet passage 111 and the second powder inlet passage 112 are positioned on an upper end of the powder supply base 11. The first powder outlet passage 113 is provided for the first preformed powder to drop from the powder supply base 11. The second powder outlet passage 114 and the first powder outlet passage 113 are spaced from each other. The second powder outlet passage 114 is provided for the second preformed powder to drop from the powder supply base 11. In the embodiment, the first powder outlet passage 113 and the second powder outlet passage 114 are positioned on a lower end of the powder supply base 11. The first receiving space 115 is communication with the first powder inlet passage 111, the second powder inlet passage 112, the first powder outlet passage 113, and the second powder outlet passage 114. The first receiving space 115 is configured to receive the powder supply unit 12.

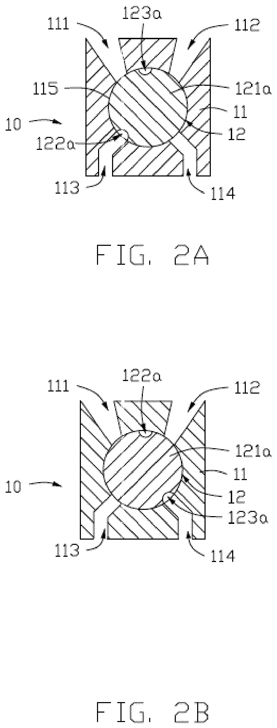

The powder supply unit 12 includes a first roller 121a. The first roller 121a is rotatably received in the first receiving space 115. The first roller 121a defines a first receiving groove 122a and a second receiving groove 123a. The first receiving groove 122a and the second receiving groove 123a are formed on peripheral surface of the first roller 121a. The first receiving groove 122a and the second receiving groove 123a are spaced from each other. In the embodiment, in an initial state, the first receiving groove 122a and the first powder inlet passage 111 are communication with each other, and the second receiving groove 123a and the second powder inlet passage 112 are communication with each other. The first receiving groove 122a is configured to receive the first preformed powder, and the second receiving groove 123a is configured to receive the second preformed powder. The first roller 121a can be driven by a motor, an air cylinder, or the limiting unit 30 to rotate along a first direction, thus the first receiving groove 122a is communication with the first powder outlet passage 113 (as shown in FIG. 2A). The first roller 121a can also rotate along a second direction to cause the second receiving groove 123a to be communication with the second powder outlet passage 114 (as shown in FIG. 2B). In the embodiment, the first roller 121a is driven to rotate by the limiting unit 30. In the embodiment, the first direction is a counterclockwise direction and the second direction is a clockwise direction. In the embodiment, the rotated angle of the first roller 121a along the first direction can be within a preset range, only if a communication between the first receiving groove 122a and the first powder outlet passage 113 can be achieved. The rotated angle of the first roller 121a along the second direction can be within another preset range, only if a communication between the second receiving groove 123a and the second powder outlet passage 114 can be achieved. Thus, the rotated angle of the first roller 121a does not need to be accurately controlled. In the embodiment, the first roller 121a can be driven one or more times to rotate along the first direction one or more times to transfer the first preformed powder received in the first receiving groove 122a from the first powder inlet passage 111 to the first powder outlet passage 113. The first roller 121a can also be driven one or more times to rotate along the second direction one or more times to transfer the second preformed powder received in the second receiving groove 123a from the second powder inlet passage 112 to the second powder outlet passage 114. Thus, the disclosure can control the first roller 121a to rotate one or more times to one or more times add a fix quantity of powder. Thereby, the quantity of the powder spread by the powder spreading device 1 can be controlled.

In other embodiments, in the initial state, the first receiving groove 122a is spaced from the first powder inlet passage 111, and the second receiving groove 123a is spaced from the second powder inlet passage 112. The first roller 121a can be driven to rotate along the first direction, thus the first receiving groove 122a and the first powder inlet passage 111 are communication with each other to receive the first preformed powder. The first roller 121a can be continuously driven to rotate along the first direction to cause the first receiving groove 122a and the first powder outlet passage 113 to be communication with each other. Thus, the first preformed powder can be transferred from the first powder inlet passage 111 to the first powder outlet passage 113. The first roller 121a can be driven to rotate along the second direction, thus the second receiving groove 123a and the second powder inlet passage 112 are communication with each other to receive the second preformed powder. The first roller 121a can be continuously driven to rotate along the second direction to cause the second receiving groove 123a to communicate with the second powder outlet passage 114. Thus, the second preformed powder can be transferred from the second powder inlet passage 112 to the second powder outlet passage 114.

Referring also to FIG. 4, FIG. 4 is a schematic view of the limiting unit and the powder supply unit of the powder spreading device. The powder supply unit 12 further includes a first triggering unit 124a. The first triggering unit 124a is fixed to the first roller 121a. The first triggering unit 124a passes through the powder supply base 11 to be exterior to the powder supply base 11. In the embodiment, the first triggering unit 124a can be a shaft. The first triggering unit 124a deviates from an axes of the first roller 121a. Thus, the first triggering unit 124a can be triggered by the limiting unit 30 to rotate along the first direction or the second direction.

A first end of the return member 13 is fixed in the forming box, and a second end of the return member 13 is fixed to the first triggering unit 124a. The return member 13 is configured to provide a return force to cause the first triggering unit 124a to bring the first roller 121a to return to the initial state. In the embodiment, the return member 13 is a spring.

The powder spreading unit 20 includes a powder spreading base 21, a powder feeding unit 22, a scraper 23, and a resisting block 24. The powder spreading base 21 can be driven to reciprocately move. In the embodiment, the powder spreading base 21 can be coupled to a guide rail, and be controlled by a controller to reciprocately move along the guide rail. The powder spreading base 21 can be active driven or passive driven. In the embodiment, a driven structure, such as a motor or the like, is installed on the powder spreading base 21. The powder spreading base 21 can be driven by the driven structure, for example the motor. At the moment, the powder spreading base 21 is active driven. When no driven structure, for example the motor or the like, is installed on the powder spreading base 21, the powder spreading base 21 is driven by the driven structure, such as an external motor or the like, and pulled to move via a connection member, such as a string and so on. At the moment, the powder spreading base 21 is passive driven. The powder spreading base 21 defines a first powder storage passage 211, a second powder storage passage 212, a first powder feeding passage 213, a second powder feeding passage 214, and a second receiving space 215. The first powder storage passage 211 and the second powder storage passage 212 can be spaced from each other. In the initial state, the powder spreading base 21 is at an initial position, that is, the first powder storage passage 211 and the second powder storage passage 212 are respectively under the first powder outlet passage 113 and the second powder outlet passage 114. The first powder storage passage 211 is configured to store the first preformed powder dropped from the first powder outlet passage 113. The second powder storage passage 212 is configured to store the second preformed powder dropped from the second powder outlet passage 114. The first powder feeding passage 213 is provided for the first preformed powder to drop from the powder spreading base 21. The second powder feeding passage 214 is spaced from the first powder feeding passage 213. The second powder feeding passage 214 is provided for the second preformed powder to drop from the powder spreading base 21. The second receiving space 215 is configured to receive the powder feeding unit 22.

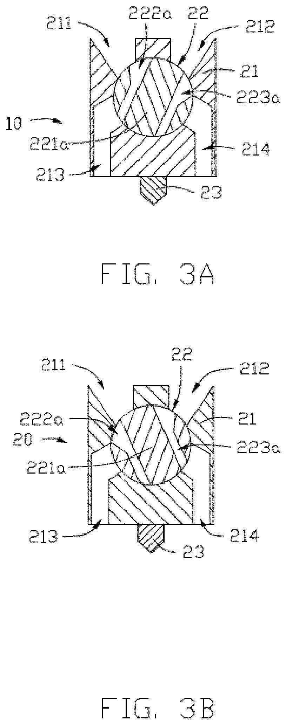

The powder feeding unit 22 includes a second roller 221a. The second roller 221a is rotatably received in the second receiving space 215. The second roller 221a defines a first passage 222a and a second passage 223a. The first passage 222a and the second passage 223a extend through a peripheral surface of the second roller 221a. The first passage 222a and the second passage 223a are spaced from each other. In the initial state, the second roller 221a spaces the first powder storage passage 211 from the first powder feeding passage 213, and spaces the second powder storage passage 212 from the second powder feeding passage 214. The second roller 221a can be driven to rotate along a third direction by the motor, the air cylinder, or the resisting block 24, to cause the first passage 222a to communicate with the first powder storage passage 211 and the first powder feeding passage 213 (as shown in FIG. 3A). The second roller 221a can be also driven to rotate along a fourth direction by the motor, the air cylinder, or the resisting block 24, to cause the second passage 223a to communicate with the second powder storage passage 212 and the second powder feeding passage 214 (as shown in FIG. 3B). In the embodiment, the second roller 221a can be driven to rotate by the resisting block 24. In the embodiment, the third direction is a clockwise direction, and the fourth direction is a counterclockwise direction.

The powder feeding unit 22 further includes a second triggering unit. The second triggering unit is fixed to the second roller 221a. The second triggering unit passes through the powder spreading base 21 to be exterior to the powder spreading base 21. In the embodiment, the second triggering unit can be another shaft. The second triggering unit deviates from an axes of the second roller 221a.

The scraper 23 is fixed to and below the powder spreading base 21. The scraper 23 may include a blade or a number of blades. In the embodiment, the scraper 23 includes a blade. In the embodiment, the first preformed powder dropped from the first powder feeding passage 213 and the second preformed powder dropped from the second powder feeding passage 214 are respectively dropped from a left side and a right side of the scraper 23. The scraper 23 is configured to smooth the preformed powder dropped onto the forming zone 40 from the first powder feeding passage 213 or the second powder feeding passage 214.

The resisting block 24 is fixed in the forming box. In the embodiment, the resisting block 24 includes a first resisting block 241 and a second resisting block 242. The first resisting block 241 and the second resisting block 242 are respectively arranged at two ends of a route of the powder spreading base 21. In the embodiment, the first resisting block 241 and the second resisting block 242 are respectively arranged at a leftmost end and a rightmost end of the route of the powder spreading base 21. The first resisting block 241 and the second resisting block 242 are configured to resist the second triggering unit. In the embodiment, the second triggering unit deviates from the axes of the second roller 221a, thus the second triggering unit can be resisted by the first resisting block 241 to rotate along the fourth direction, and can be resisted by the second resisting block 242 to rotate along the third direction. Thus, the second roller 221a can be brought by the second triggering unit to rotate along the fourth direction or the third direction. In the embodiment, the first resisting block 241 and the second resisting block 242 can be driven by a rotatable cylinder to rotate to a position being away from the second triggering unit.

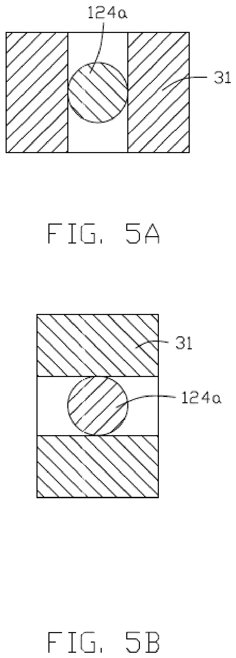

Referring also to FIG. 4, the limiting unit 30 is fixed to and above the powder spreading base 21. The limiting unit 30 includes a limiting block 31 and a rotatable cylinder 32. The rotatable cylinder 32 is fixed to and above the powder spreading base 21. The rotatable cylinder 32 is fixed to the limiting block 31. The rotatable cylinder 32 can be controlled by the controller to drive the limiting block 31 to rotate. In the embodiment, the rotatable cylinder 32 drives the limiting block 31 to rotate 90 degrees. The limiting block 31 is driven by the rotatable cylinder 32 to switch between a trigger state and an untriggered state. In the embodiment, the cross-section of the limiting block 31 is U-shaped. In other embodiments, the cross-section of the limiting block 31 is V-shaped, or the like. Referring also to FIG. 5A and FIG. 5B, FIG. 5A is a schematic view showing that the limiting unit and a first triggering unit of the powder supply unit are in a trigger state, and FIG. 5B is a schematic view showing that the limiting unit and a first triggering unit of the powder supply unit are in an untriggered state. In the trigger state, the limiting lock can trigger the first triggering unit 124a to rotate along the first direction or the second direction, to bring the first roller 121a to rotate along the first direction or the second direction. In the untriggered state, the limiting block 31 is away from the first triggering unit 124a, thus the powder spreading base 21 can freely move.

A lifting movable plate 41 is installed in the forming zone 40. During working, after a preformed powder layer is sintered, the lifting movable plate 41 is lowed by a layer, the preformed powder is smoothed by the powder spreading unit 20, and continuing in this manner a new preformed powder layer is sintered.

In the embodiment, the powder spreading device 1 further includes a collection device. The collection device includes a first collection unit 61 and a second collection unit 62. In the embodiment, the first collection unit 61 and the second collection unit 62 are respectively positioned at a left side and a right side of the forming zone 40. In a process that the powder spreading base 21 moves along a fifth direction to cause the powder spreading unit 20 to spread the first preformed powder onto the forming zone 40, because surplus powder may be appeared, the first collection unit 61 can be employed to collect the surplus powder remained when the powder spreading unit 20 spreads powder along the fifth direction. In a process that the powder spreading base 21 moves along a sixth direction to cause the powder spreading unit 20 to spread the second preformed powder onto the forming zone 40, because surplus powder may be appeared, the second collection unit 62 can be employed to collect the surplus powder remained when the powder spreading unit 20 spreads powder along the sixth direction. Thus, a quality of the powder during spreading can be ensured. In the embodiment, the fifth direction can be from left to right, and the sixth direction can be from right to left.

To add the first preformed powder, the powder spreading base 21 can be controlled by the controller to move along the fifth direction near the initial position, bringing the limiting block 31 to trigger the first triggering unit 124a. The first triggering unit 124a brings the first roller 121a to rotate along the first direction until the limiting block 31 is away from the first triggering unit 124a. At the moment, the fix quantity of the first preformed powder received in the first receiving groove 122a of the first roller 121a is transferred from the first powder inlet passage 111 to the first powder outlet passage 113, and is dropped to the first powder storage passage 211 through the first powder outlet passage 113. The first triggering unit 124a can bring the first roller 121a to return to the initial state by the return member 13. At the moment, the controller controls the rotatable cylinder 32 to drive the limiting block 31 to rotate, thus the limiting block 31 is away from the first triggering unit 124a, and the powder spreading base 21 can freely move along the sixth direction. Thus, the controller can control the powder spreading base 21 to reciprocately move more times according to the required quantity of the powder during spreading, thus the first roller 121a can reciprocately rotate more times to more times add the fix quantity of the first preformed powder.

To add the second preformed powder, the powder spreading base 21 can be controlled by the controller to move along the sixth direction near the initial position, bringing the limiting block 31 to trigger the first triggering unit 124a. The first triggering unit 124a brings the first roller 121a to rotate along the second direction until the limiting block 31 is away from the first triggering unit 124a. At the moment, the fix quantity of the second preformed powder received in the second receiving groove 123a of the first roller 121a is transferred from the second powder inlet passage 112 to the second powder outlet passage 114, and is dropped to the second powder storage passage 212 through the second powder outlet passage 114. The first triggering unit 124a can bring the first roller 121a to return to the initial state by the return member 13. At the moment, the controller controls the rotatable cylinder 32 to drive the limiting block 31 to rotate, thus the limiting block 31 is away from the first triggering unit 124a, and the powder spreading base 21 can freely move along the fifth direction. Thus, the controller can control the powder spreading base 21 to reciprocately move more times according to the required quantity of the powder during spreading, thus the first roller 121a can reciprocately rotate more times to more times add the fix quantity of the second preformed powder.

To spread the second preformed powder, the powder spreading base 21 is controlled by the controller to move along the sixth direction near the initial position, until the second triggering unit resists the first resisting block 241. The second triggering unit can be resisted by the first resisting block 241 to rotate along the fourth direction. The second roller 221a can be brought by the second triggering unit to rotate along the fourth direction, causing the second powder storage passage 212 to be communicate with the second powder feeding passage 214 through the second passage 223a. The second preformed powder in the second powder storage passage 212 drops from the right side of the scraper 23 onto the forming zone 40 through the second passage 223a and the second powder feeding passage 214. The powder spreading base 21 can be controlled by the controller to move along the fifth direction to cause the powder spreading unit 20 to spread the powder onto the forming zone 40, thus the second preformed powder is spread onto the forming zone 40.

To spread the first preformed powder, the powder spreading base 21 is controlled by the controller to move along the fifth direction near a terminal of the route of the powder spreading base 21, as the rightmost end of the powder spreading base 21 shown in FIG. 1, until the second triggering unit resists the second resisting block 242. The second triggering unit can be resisted by the second resisting block 242 to rotate along the third direction. The second roller 221a can be brought by the second triggering unit to rotate along the third direction, causing the first powder storage passage 211 to be communicate with the first powder feeding passage 213 through the first passage 222a. The first preformed powder in the first powder storage passage 211 drops from the left side of the scraper 23 onto the forming zone 40 through the first passage 222a and the first powder feeding passage 213. The powder spreading base 21 can be controlled by the controller to move along the sixth direction to cause the powder spreading unit 20 to spread the powder onto the forming zone 40, thus the first preformed powder is spread onto the forming zone 40.

Obviously, the disclosure is not limited to achieving to serially spread powder with various types of material, namely, the powder spreading unit 20 spreads the second preformed powder when the powder spreading base 21 moves along the fifth direction, and the powder spreading unit 20 spreads the first preformed powder when the powder spreading base 21 moves along the sixth direction. The disclosure can also achieve to serially spread powder with a single type of material, such as serially spread the second preformed powder. In detail, the powder spreading unit 20 spreads the second preformed powder when the powder spreading base 21 moves along the fifth direction. The second resisting block 242 rotates when the powder spreading base 21 moves along the sixth direction. The second roller 221a spaces the first powder storage passage 211 from the first powder feeding passage 213, thus the first preformed powder does not drop from the first powder feeding passage 213 and the powder spreading unit 20 does not spread powder. The disclosure can also achieve to serially spread powder, such as the first preformed powder. In detail, the first resisting block 241 rotates when the powder spreading base 21 moves along the fifth direction. The second roller 221a spaces the second powder storage passage 212 from the second powder feeding passage 214, thus the second preformed powder does not drop from the second powder feeding passage 214 and the powder spreading unit 20 does not spread powder. The powder spreading unit 20 spreads the first preformed powder when the powder spreading base 21 moves along the sixth direction. The disclosure can also achieve to select a layer and powder during spreading, for example, spreading the second preformed powder on the first layer, spreading the first preformed powder the second time, spreading no powder on the third layer, spreading the first preformed powder on the fourth layer, spreading the second preformed powder on the fifth layer, and spreading no powder on the sixth layer.

The disclosure provides first powder storage box 51 and the second powder storage box 52 to provide the first preformed powder and the second preformed powder. The disclosure controls the first roller 121a to reciprocately move one or more times to more times add the fix quantity of the powder, thus a quantity of powder during spreading can be accurately controlled. The disclosure controls the first roller 121a to rotate along the first direction or the second direction to achieve to add the first preformed powder or the second preformed powder. The disclosure controls the first roller 121a to rotate along the first direction or the second direction to achieve to add the powder, no need to accurately control a rotation angle of the roller, thus an installation accuracy requirement of the powder spreading device 1 can be reduced. The disclosure provides the limiting block 31 to drive the first roller 121a to rotate, no need the driving structure, such as the motor or the like, to drive the first roller 121a, thus the power source can be saved. The disclosure provides the return member 13 to cause the first roller 121a to automatically return to the initial position. The disclosure provides the rotatable cylinder 32 to drive the limiting block 31 to rotate, thus the limiting block 31 is rotated to be away from or trigger the first triggering unit 124a, thereby adding the powder or adding no powder can be selected, and adding the first preformed powder and/or adding the second preformed powder can be selected. The disclosure provides the first resisting block 241 to resist the second triggering unit to spread the second preformed powder and provides the second resisting block 242 to resist the second triggering unit to spread the first preformed powder. The disclosure provides the rotatable cylinder 32 to drive the first resisting block 241 and the second resisting block 242 to rotate, causing the first resisting block 241 to be away from or trigger the second triggering unit, spreading the first preformed powder and/or the second preformed powder can be selected, thus serially spreading powder with a single or various types of material or selecting the layer and the powder during spreading can be achieved. The disclosure provides the collection device to collect the surplus powder, thus a quality of powder during spreading can be ensured.

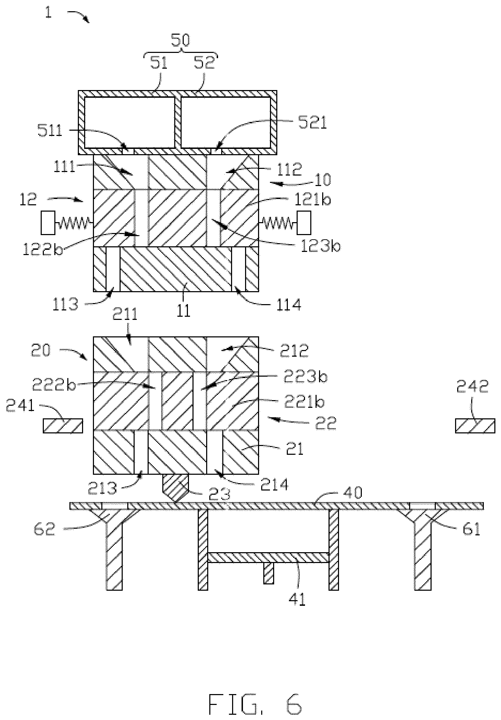

Referring to FIG. 6, FIG. 6 is a schematic view of a powder spreading device of a second embodiment, where an intermediate powder supply device and a powder spreading unit of the powder spreading device being turn off. A structure of the powder spreading device of the second embodiment is similar to the structure of the powder spreading device of the first embodiment. The difference between the structure of the powder spreading device of the second embodiment and the structure of the powder spreading device of the first embodiment is that, the structure of the powder supply unit, a connection relation between the return member and the powder supply unit, the structure of the powder feeding unit, in detail:

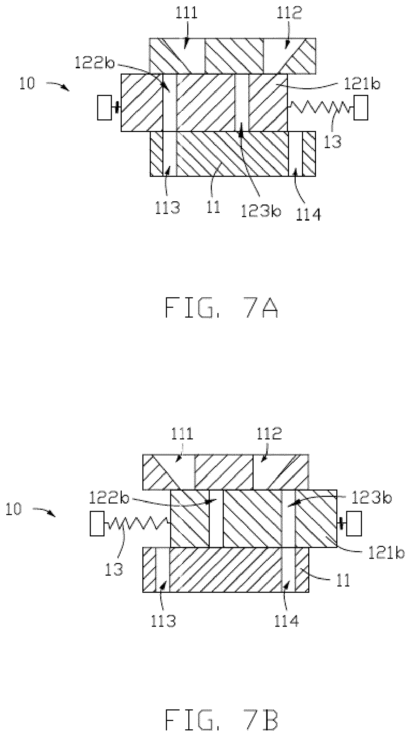

The powder supply unit 12 includes a first movable block 121b. The first movable block 121b is movably received in the first receiving space 115. The first movable block 121b defines a first through hole 122b and a second through hole 123b. The first through hole 122b and the second through hole 123b pass through a first surface and a second surface of the first movable block 121b. The second surface is opposite to the first surface. In the embodiment, the first surface is an upper surface and the second surface is a lower surface. The second through hole 123b is spaced from the first through hole 122b. In the embodiment, in an initial state, the first through hole 122b communicates with the first powder inlet passage 111, and the second through hole 123b communicates with the second powder inlet passage 112. The first through hole 122b is configured to receive the first preformed powder, and the second through hole 123b is configured to receive the second preformed powder. The first movable block 121b can be driven by the motor, the air cylinder, or the limiting unit 30 to move along the first direction, thus the first through hole 122b communicates with the first powder outlet passage 113 (as shown in FIG. 7A). The first movable block 121b can also move along the second direction to cause the second through hole 123b to communicate with the second powder outlet passage 114 (as shown in FIG. 7B). In the embodiment, the first movable block 121b is driven to move by the limiting unit 30. In the embodiment, the first direction is from right to left and the second direction is from left to right. In the embodiment, a movement distance of the first movable block 121b along the first direction can be within a preset range, only if a communication between the first through hole 122b and the first powder outlet passage 113 can be achieved. A movement distance of the first movable block 121b along the second direction can be within another preset range, only if a communication between the second through hole 123b and the second powder outlet passage 114 can be achieved. Thus, the movement distance of the first movable block 121b does not need to be accurately controlled. In the embodiment, the first movable block 121b can be driven one or more times to move along the first direction one or more times to transfer the first preformed powder received in the first through hole 122b from the first powder inlet passage 111 to the first powder outlet passage 113. The first movable block 121b can also be driven one or more times to move along the second direction one or more times to transfer the second preformed powder received in the second through hole 123b from the second powder inlet passage 112 to the second powder outlet passage 114. Thus, the disclosure can control the first movable block 121b to move one or more times to one or more times add the fix quantity of powder. Thereby, the quantity of the powder spread by the powder spreading device 1 can be controlled.

In other embodiments, in the initial state, the first through hole 122b is spaced from the first powder inlet passage 111, and the second through hole 123b is spaced from the second powder inlet passage 112. The first movable block 121b can be driven to move along the first direction, thus the first through hole 122b and the first powder inlet passage 111 are communication with each other to receive the first preformed powder. The first movable block 121b can be continuously driven to rotate along the first direction to cause the first through hole 122b and the first powder outlet passage 113 to be communication with each other. Thus, the first preformed powder can be transferred from the first powder inlet passage 111 to the first powder outlet passage 113. The first movable block 121b can be driven to move along the second direction, thus the second through hole 123b and the second powder inlet passage 112 are communication with each other to receive the second preformed powder. The first movable block 121b can be continuously driven to move along the second direction to cause the second through hole 123b to communicate with the second powder outlet passage 114. Thus, the second preformed powder can be transferred from the second powder inlet passage 112 to the second powder outlet passage 114.

The powder supply unit 12 further includes a first triggering unit. The first triggering unit is fixed to the first movable block 121b. In the embodiment, the first triggering unit is a connection block or any other suitable structure. The first triggering unit can be triggered by the limiting unit 30 to move along the first direction or the second direction. In the embodiment, the first end of the return member 13 is fixed in the forming box, and the second end of the return member 13 is fixed to the first movable block 121b. The return member 13 is configured to provide a return force to cause the first movable block 121b to return to the initial state. In other embodiments, the first end of the return member 13 is fixed in the forming box, and the second end of the return member 13 is fixed to the first triggering unit. The return member 13 is configured to provide a return force to cause the first triggering unit to bring the first movable block 121b to return to the initial state.

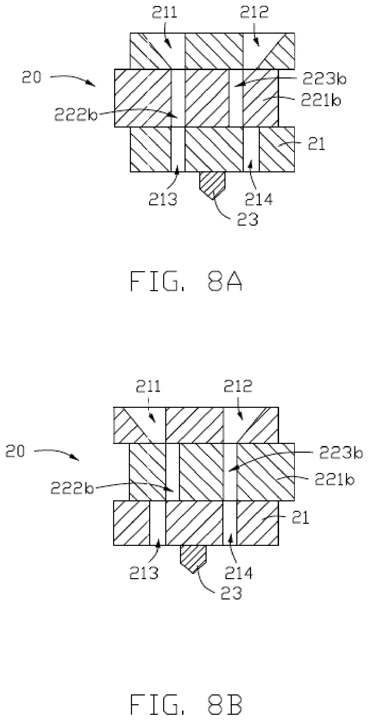

The powder feeding unit 22 includes a second movable block 221b. The second movable block 221b is movably received in the second receiving space 215. The second movable block 221b defines a third through hole 222b and a fourth through hole 223b. The third through hole 222b and the fourth through hole 223b extend through a first surface of the second movable block 221b and a second surface of the second movable block 221b. The second surface of the second movable block 221b is opposite to the first surface of the second movable block 221b. In the embodiment, the first surface of the second movable block 221b is an upper surface of the second movable block 221b, and the second surface of the second movable block 221b is a lower surface of the second movable block 221b. The fourth through hole 223b and the third through hole 222b are spaced from each other. In the initial state, the second movable block 221b spaces the first powder storage passage 211 from the first powder feeding passage 213, and spaces the second powder storage passage 212 from the second powder feeding passage 214. The second movable block 221b can be driven to move along the third direction by the motor, the air cylinder, or the resisting block, to cause the third through hole 222b to communicate with the first powder storage passage 211 and the first powder feeding passage 213 (as shown in FIG. 8A). The second movable block 221b can be also driven to move along the fourth direction by the motor, the air cylinder, or the resisting block, to cause the fourth through hole 223b to communicate with the second powder storage passage 212 and the second powder feeding passage 214 (as shown in FIG. 8B). In the embodiment, the second movable block 221b can be driven to move by the resisting block. In the embodiment, the third direction is from right to left, and the fourth direction is from left to right.

The powder feeding unit 22 further includes a second triggering unit. The second triggering unit is fixed to the second movable block 221b. In the embodiment, the second triggering unit is a connection block or any other suitable structure. The second triggering unit can be triggered by the limiting unit 30 to move along the third direction or the fourth direction.

To add the first preformed powder, the powder spreading base 21 can be controlled by the controller to move along the fifth direction near the initial position, bringing the limiting block 31 to trigger the first triggering unit. The first triggering unit brings the first movable block 121b to move along the first direction until the limiting block 31 is away from the first triggering unit. At the moment, the fix quantity of the first preformed powder received in the first through hole 122b of the first movable block 121b is transferred from the first powder inlet passage 111 to the first powder outlet passage 113, and is dropped to the first powder storage passage 211 through the first powder outlet passage 113. The first movable block 121b returns to the initial state by the return member 13. At the moment, the controller controls the rotatable cylinder 32 to drive the limiting block 31 to rotate, thus the limiting block 31 is away from the first triggering unit, and the powder spreading base 21 can freely move along the sixth direction. Thus, the controller can control the powder spreading base 21 to reciprocately move more times according to the required quantity of the powder during spreading, thus the first movable block 121b can reciprocately rotate more times to more times add the fix quantity of the first preformed powder.

To add the second preformed powder, the powder spreading base 21 can be controlled by the controller to move along the sixth direction near the initial position, bringing the limiting block 31 to trigger the first triggering unit. The first triggering unit brings the first movable block 121b to move along the second direction until the limiting block 31 is away from the first triggering unit. At the moment, the fix quantity of the second preformed powder received in the second through hole 123b of the first movable block 121b is transferred from the second powder inlet passage 112 to the second powder outlet passage 114, and is dropped to the second powder storage passage 212 through the second powder outlet passage 114. The first movable block 121b returns to the initial state by the return member 13. At the moment, the controller controls the rotatable cylinder 32 to drive the limiting block 31 to rotate, thus the limiting block 31 is away from the first triggering unit, and the powder spreading base 21 can freely move along the fifth direction. Thus, the controller can control the powder spreading base 21 to reciprocately move more times according to the required quantity of the powder during spreading, thus the first movable block 121b can reciprocately move more times to more times add the fix quantity of the second preformed powder.

To spread the second preformed powder, the powder spreading base 21 is controlled by the controller to move along the sixth direction near the initial position, until the second triggering unit resists the first resisting block 241. The second triggering unit can be resisted by the first resisting block 241 to move along the fourth direction. The second movable block 221b can be brought by the second triggering unit to move along the fourth direction, causing the second powder storage passage 212 to be communicate with the second powder feeding passage 214 through the fourth through hole 223b. The second preformed powder in the second powder storage passage 212 drops from the right side of the scraper 23 onto the forming zone through the fourth through hole 223b and the second powder feeding passage 214. The powder spreading base 21 can be controlled by the controller to move along the fifth direction to cause the powder spreading unit 20 to spread the powder onto the forming zone, thus the second preformed powder is spread onto the forming zone.

To spread the first preformed powder, the powder spreading base 21 is controlled by the controller to move along the fifth direction near a terminal of the route of the powder spreading base 21, as the rightmost end of the powder spreading base 21 shown in FIG. 6, until the second triggering unit resists the second resisting block 242. The second triggering unit can be resisted by the second resisting block 242 to move along the third direction. The second movable block 221b can be brought by the second triggering unit to move along the third direction, causing the first powder storage passage 211 to be communicate with the first powder feeding passage 213 through the third through hole 222b. The first preformed powder in the first powder storage passage 211 drops from the left side of the scraper 23 onto the forming zone through the third through hole 222b and the first powder feeding passage 213. The powder spreading base 21 can be controlled by the controller to move along the sixth direction to cause the powder spreading unit 20 to spread the powder onto the forming zone, thus the first preformed powder is spread onto the forming zone.

A structure of a powder spreading device of a third embodiment is similar to the structure of the powder spreading device of the first embodiment. The difference between the structure of the powder spreading device of the third embodiment and the structure of the powder spreading device of the first embodiment is that, the structure of the powder supply unit, a connection relation between the return member and the powder supply unit, in detail:

The powder supply unit includes a first movable block. The first movable block is movably received in the first receiving space. The first movable block defines a first through hole and a second through hole. The first through hole and the second through hole pass through a first surface of the first movable block and a second surface of the first movable block. The second surface is opposite to the first surface. In the embodiment, the first surface is an upper surface and the second surface is a lower surface. The second through hole is spaced from the first through hole. In the embodiment, in an initial state, the first through hole communicates with the first powder inlet passage, and the second through hole communicates with the second powder inlet passage. The first through hole is configured to receive the first preformed powder, and the second through hole is configured to receive the second preformed powder. The first movable block can be driven by the motor, the air cylinder, or the limiting unit to move along the first direction, thus the first through hole communicates with the first powder outlet passage. The first movable block can also move along the second direction to cause the second through hole to communicate with the second powder outlet passage. In the embodiment, the first movable block is driven to move by the limiting unit. In the embodiment, the first direction is from right to left and the second direction is from left to right. In the embodiment, a movement distance of the first movable block along the first direction can be within a preset range, only if a communication between the first through hole and the first powder outlet passage can be achieved. A movement distance of the first movable block along the second direction can be within another preset range, only if a communication between the second through hole and the second powder outlet passage can be achieved. Thus, the movement distance of the first movable block does not need to be accurately controlled. In the embodiment, the first movable block can be driven one or more times to move along the first direction one or more times to transfer the first preformed powder received in the first through hole from the first powder inlet passage to the first powder outlet passage. The first movable block can also be driven one or more times to move along the second direction one or more times to transfer the second preformed powder received in the second through hole from the second powder inlet passage to the second powder outlet passage. Thus, the disclosure can control the first movable block to move one or more times to one or more times add the fix quantity of powder. Thereby, the quantity of the powder spread by the powder spreading device can be controlled.

In other embodiments, in the initial state, the first through hole is spaced from the first powder inlet passage, and the second through hole is spaced from the second powder inlet passage. The first movable block can be driven to move along the first direction, thus the first through hole and the first powder inlet passage are communication with each other to receive the first preformed powder. The first movable block can be continuously driven to rotate along the first direction to cause the first through hole and the first powder outlet passage to be communication with each other. Thus, the first preformed powder can be transferred from the first powder inlet passage to the first powder outlet passage. The first movable block can be driven to move along the second direction, thus the second through hole and the second powder inlet passage are communication with each other to receive the second preformed powder. The first movable block can be continuously driven to move along the second direction to cause the second through hole to communicate with the second powder outlet passage. Thus, the second preformed powder can be transferred from the second powder inlet passage to the second powder outlet passage.

The first triggering unit is fixed to the first movable block. In the embodiment, the first triggering unit is a connection block or any other suitable structure. The first triggering unit can be triggered by the limiting unit to move along the first direction or the second direction. In the embodiment, the first end of the return member is fixed in the forming box, and the second end of the return member is fixed to the first movable block. The return member is configured to provide a return force to cause the first movable block to return to the initial state. In other embodiments, the first end of the return member is fixed in the forming box, and the second end of the return member is fixed to the first triggering unit. The return member is configured to provide a return force to cause the first triggering unit to bring the first movable block to return to the initial state.

To add the first preformed powder, the powder spreading base can be controlled by the controller to move along the fifth direction near the initial position, bringing the limiting block to trigger the first triggering unit. The first triggering unit brings the first movable block to move along the first direction until the limiting block is away from the first triggering unit. At the moment, the fix quantity of the first preformed powder received in the first through hole of the first movable block is transferred from the first powder inlet passage to the first powder outlet passage, and is dropped to the first powder storage passage through the first powder outlet passage. The first movable block returns to the initial state by the return member. At the moment, the controller controls the rotatable cylinder to drive the limiting block to rotate, thus the limiting block is away from the first triggering unit, and the powder spreading base can freely move along the sixth direction. Thus, the controller can control the powder spreading base to reciprocately move more times according to the required quantity of the powder during spreading, thus the first movable block can reciprocately move more times to more times add the fix quantity of the first preformed powder.

To add the second preformed powder, the powder spreading base can be controlled by the controller to move along the sixth direction near the initial position, bringing the limiting block to trigger the first triggering unit. The first triggering unit brings the first movable block to move along the second direction until the limiting block is away from the first triggering unit. At the moment, the fix quantity of the second preformed powder received in the second through hole of the first movable block is transferred from the second powder inlet passage to the second powder outlet passage, and is dropped to the second powder storage passage through the second powder outlet passage. The first movable block returns to the initial state by the return member. At the moment, the controller controls the rotatable cylinder to drive the limiting block to rotate, thus the limiting block is away from the first triggering unit, and the powder spreading base can freely move along the fifth direction. Thus, the controller can control the powder spreading base to reciprocately move more times according to the required quantity of the powder during spreading, thus the first movable block can reciprocately move more times to more times add the fix quantity of the second preformed powder.

A structure of a powder spreading device of a fourth embodiment is similar to the structure of the powder spreading device of the first embodiment. The difference between the structure of the powder spreading device of the fourth embodiment and the structure of the powder spreading device of the first embodiment is that, the structure of the powder feeding unit, in detail:

The powder feeding unit includes a second movable block. The second movable block is movably received in the second receiving space. The second movable block defines a third through hole and a fourth through hole. The third through hole and the fourth through hole extend through a first surface of the second movable block and a second surface of the second movable block. The second surface of the second movable block is opposite to the first surface of the second movable block. In the embodiment, the first surface of the second movable block is an upper surface of the second movable block, and the second surface of the second movable block is a lower surface of the second movable block. The fourth through hole and the third through hole are spaced from each other. In the initial state, the second movable block spaces the first powder storage passage from the first powder outlet passage, and spaces the second powder storage passage from the second powder feeding passage. The second movable block can be driven to move along the third direction by the motor, the air cylinder, or the resisting block, to cause the third through hole to communicate with the first powder storage passage and the first powder feeding passage. The second movable block can be also driven to move along the fourth direction by the motor, the air cylinder, or the resisting block, to cause the fourth through hole to communicate with the second powder storage passage and the second powder feeding passage. In the embodiment, the second movable block can be driven to move by the resisting block. In the embodiment, the third direction is from right to left, and the fourth direction is from left to right.

The second triggering unit is fixed to the second movable block. In the embodiment, the second triggering unit is a connection block or any other suitable structure. The second triggering unit can be triggered by the limiting unit to move along the third direction or the fourth direction.

To spread the second preformed powder, the powder spreading base is controlled by the controller to move along the sixth direction near the initial position, until the second triggering unit resists the first resisting block. The second triggering unit can be resisted by the first resisting block to move along the fourth direction. The second movable block can be brought by the second triggering unit to move along the fourth direction, causing the second powder storage passage to be communicate with the second powder feeding passage through the fourth through hole. The second preformed powder in the second powder storage passage drops from the right side of the scraper onto the forming zone through the fourth through hole and the second powder feeding passage. The powder spreading base can be controlled by the controller to move along the fifth direction to cause the powder spreading unit to spread the powder onto the forming zone, thus the second preformed powder is spread onto the forming zone.

To spread the first preformed powder, the powder spreading base is controlled by the controller to move along the fifth direction near a terminal of the route of the powder spreading base until the second triggering unit resists the second resisting block. The second triggering unit can be resisted by the second resisting block to move along the third direction. The second movable block can be brought by the second triggering unit to move along the third direction, causing the first powder storage passage to be communicate with the first powder feeding passage through the third through hole. The first preformed powder in the first powder storage passage drops from the left side of the scraper onto the forming zone through the third through hole and the first powder feeding passage. The powder spreading base can be controlled by the controller to move along the sixth direction to cause the powder spreading unit to spread the powder onto the forming zone, thus the first preformed powder is spread onto the forming zone.

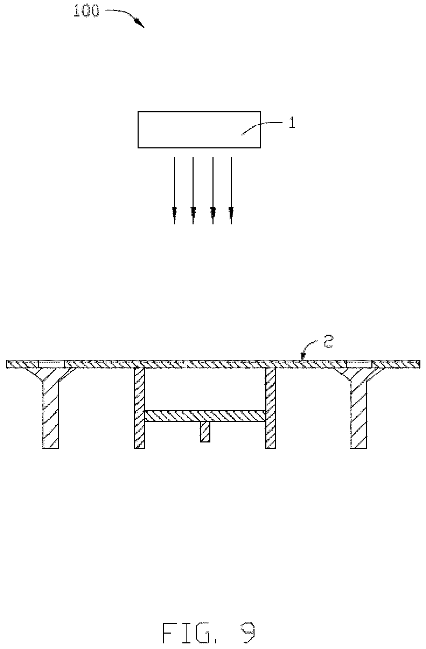

Referring to FIG. 9, FIG. 9 is a schematic view of a printer omitting a part of structure. The printer 100 includes the powder spreading device 1 and a laser 2. The powder spreading device 1 can be the powder spreading device of the first embodiment, the powder spreading device of the second embodiment, the powder spreading device of the third embodiment, or the powder spreading device of the fourth embodiment. The laser 2 can be configured to sinter the preformed powder on the forming zone of the powder spreading device 1.

## Claims

1. A powder spreading device (1) being **characterizing by**:
the powder spreading device (1) comprising a forming box, an intermediate powder supply device (10), and a powder spreading unit (20);
the intermediate powder supply device (10) being fixed in the forming box, the intermediate powder supply device (10) comprising a powder supply base (11) and a powder supply unit (12), the powder supply base (11) defining a first powder inlet passage (111), a second powder inlet passage (112), a first powder outlet passage (113), a second powder outlet passage (114), and a first receiving space (115), the first powder inlet passage (111) being configured to receive a first preformed powder, the second powder inlet passage (112) being spaced from the first powder inlet passage (111), the second powder inlet passage (112) being configured to receive a second preformed powder, the first powder outlet passage (113) is configured to provide the first preformed powder to drop from the powder supply base (11), the second powder outlet passage (114) being spaced from the first powder outlet passage (113), the second powder outlet passage (114) being configured to provide the second preformed powder to drop from the powder supply base (11), the first receiving space (115) being configured to receive the powder supply unit (12), the powder supply unit (12) being configured to be driven one or more times to move along the first direction one or more times to transfer the first preformed powder from the first powder inlet passage (111) to the first powder outlet passage (113), and be driven one or more times to move along the second direction one or more times to transfer the second preformed powder from the second powder inlet passage (112) to the second powder outlet passage (114);
the powder spreading unit (20) being movably arranged in the forming box and below the intermediate powder supply device (10), the powder spreading unit (20) comprising a scraper (23), the scraper (23) being configured to smooth the first preformed powder or the second preformed powder.

2. The powder spreading device (1) according to claim 1, wherein the powder supply unit (12) comprises a first roller (121a), the first roller (121a) is rotatably received in the first receiving space (115), the first roller (121a) defines a first receiving groove (122a) and a second receiving groove (123a), the first receiving groove (122a) and the second receiving groove (123a) are formed on peripheral surface of the first roller (121a), the first receiving groove (122a) is configured to receive the first preformed powder, the second receiving groove (123a) is configured to receive the second preformed powder, the first roller (121a) is driven one or more times to rotate along the first direction one or more times to communicate the first receiving groove (122a) with the first powder outlet passage (113), to transfer the first preformed powder from the first powder inlet passage (111) to the first powder outlet passage (113), and is driven one or more times to rotate along the second direction one or more times to communicate the second receiving groove (123a) with the second powder outlet passage (114), to transfer the second preformed powder from the second powder inlet passage (112) to the second powder outlet passage (114).

3. The powder spreading device (1) according to claim 1, wherein the powder supply unit (12) comprises a first movable block (121b), the first movable block (121b) is movably received in the first receiving space (115), the first movable block (121b) defines a first through hole (122b) and a second through hole (123b), the first through hole (122b) is configured to receive the first preformed powder, the second through hole (123b) is configured to receive the second preformed powder, the first movable block (121b) is driven one or more times to move along the first direction one or more times to communicate the first through hole (122b) with the first powder outlet passage (113), to transfer the first preformed powder from the first powder inlet passage (111) to the first powder outlet passage (113), and is driven one or more times to move along the second direction one or more times to communicate the second through hole (123b) with the second powder outlet passage (114), to transfer the second preformed powder from the second powder inlet passage (112) to the second powder outlet passage (114).

4. The powder spreading device (1) according to claim 2 or claim 3, wherein the powder supply unit (12) further comprises a triggering unit, the triggering unit is fixed to the first roller (121a) or the first movable block (121b), the triggering unit passes through the powder supply base (11) to be exterior to the powder supply base (11), the powder spreading device (1) further comprises a limiting unit (30), the limiting unit (30) is fixed to and above the powder spreading unit (20), the limiting unit (30) is configured to trigger the triggering unit to bring the first roller (121a) to rotate or bring the first movable block (121b) to move.

5. The powder spreading device (1) according to claim 4, wherein the limiting unit (30) comprises a limiting block (31) and a rotatable cylinder (32), the rotatable cylinder (32) is fixed to and above the powder spreading unit (20), the rotatable cylinder (32) is fixed to the limiting block (31), the rotatable cylinder (32) is configured to drive the limiting block (31) to rotate, causing the limiting block (31) to switch between a trigger state and an untriggered state, the limiting block (31) is configured to trigger the triggering unit in the trigger state, and the limiting block (31) is configured to be away from the triggering unit in the untriggered state.

6. The powder spreading device (1) according to claim 4, wherein the intermediate powder supply device (10) comprises a return member (13), a first end of the return member (13) is fixed in the forming box, and a second end of the return member (13) is fixed to the triggering unit.

7. The powder spreading device (1) according to claim 1, wherein the powder spreading unit (20) further comprises a powder spreading base (21) and a powder feeding unit (22), the powder spreading base (21) is movably arranged in the forming box, the powder spreading base (21) defines a first powder storage passage (211), a second powder storage passage (212), a first powder feeding passage (213), a second powder feeding passage (214), and a second receiving space (215), the first powder storage passage (211) is configured to store the first preformed powder dropped from the first powder outlet passage (113), the second powder storage passage (212) is configured to store the second preformed powder dropped from the second powder outlet passage (114), the second receiving space (215) is configured to receive the powder feeding unit (22), the powder feeding unit (22) is configured to be driven to move along a third direction to communicate the first powder storage passage (211) with the first powder feeding passage (213), and be driven to move along a fourth direction to communicate the second powder storage passage (212) with the second powder feeding passage (214), where the scraper (23) is fixed to and below the powder spreading base (21), and the first preformed powder dropped from the first powder feeding passage (213) and the second preformed powder dropped from the second powder feeding passage (214) are respectively at two sides of the scraper (23).

8. The powder spreading device (1) according to claim 7, wherein the powder feeding unit (22) comprises a second roller (221a), the second roller (221a) is rotatably received in the second receiving space (215), the second roller (221a) defines a first passage (222a) and a second passage (223a), the first passage (222a) and the second passage (223a) extend through a peripheral surface of the second roller (221a), the second roller (221a) is configured to be driven to rotate along the third direction to cause the first passage (222a) to communicate with the first powder storage passage (211) and the first powder feeding passage (213), and be driven to rotate along the fourth direction to cause the second passage (223a) to communicate with the second powder storage passage (212) and the second powder feeding passage (214).

9. The powder spreading device (1) according to claim 7, wherein the powder feeding unit (22) comprises a second movable block (221b), the second movable block (221b) is movably received in the second receiving space (215), the second movable block (221b) defines a third through hole (222b) and a fourth through hole (223b), the second movable block (221b) is configured to be driven to move along the third direction to cause the third through hole (222b) to communicate with the first powder storage passage (211) and the first powder feeding passage (213), and be driven to move along the fourth direction to cause the fourth through hole (223b) to communicate with the second powder storage passage (212) and the second powder feeding passage (214).

10. A printer (100) comprising a laser (2) and a powder spreading device (1) as described in any of claims 1-9, the laser (2) being configured to output laser beam to sinter the first preformed powder and the second preformed powder.

## Patentansprüche

1. Eine Pulververteilungsvorrichtung (1), **gekennzeichnet durch**:
dass die Pulververteilungsvorrichtung (1) einen Formkasten, eine Zwischenpulverzuführvorrichtung (10) und eine Pulververteilungseinheit (20) umfasst;
wobei die Zwischenpulverzuführvorrichtung (10) in dem Formkasten befestigt ist, wobei die Zwischenpulverzuführvorrichtung (10) eine Pulverzuführbasis (11) und eine Pulverzuführeinheit (12) umfasst, wobei die Pulverzuführbasis (11) einen ersten Pulvereinlasskanal (111), einen zweiten Pulvereinlasskanal (112), einen ersten Pulverauslasskanal (113), einen zweiten Pulverauslasskanal (114) und einen ersten Aufnahmeraum (115) definiert, wobei der erste Pulvereinlasskanal (111) dazu konfiguriert ist, ein erstes vorgeformtes Pulver aufzunehmen, der zweite Pulvereinlasskanal (112) von dem ersten Pulvereinlasskanal (111) beabstandet ist, der zweite Pulvereinlasskanal (112) dazu konfiguriert ist, ein zweites vorgeformtes Pulver aufzunehmen, der erste Pulverauslasskanal (113) dazu konfiguriert ist, vorzusehen, dass das erste vorgeformte Pulver von der Pulverzuführbasis (11) herabfällt, der zweite Pulverauslasskanal (114) von dem ersten Pulverauslasskanal (113) beabstandet ist, der zweite Pulverauslasskanal (114) dazu konfiguriert ist, vorzusehen, dass das zweite vorgeformte Pulver von der Pulverzuführbasis (11) herabfällt, wobei der erste Aufnahmeraum (115) dazu konfiguriert ist, die Pulverzuführeinheit (12) aufzunehmen, wobei die Pulverzuführeinheit (12) dazu konfiguriert ist, ein oder mehrere Male angetrieben zu werden, um sich ein oder mehrere Male entlang der ersten Richtung zu bewegen, um das erste vorgeformte Pulver von dem ersten Pulvereinlasskanal (111) zu dem ersten Pulverauslasskanal (113) zu übertragen, und ein oder mehrere Male angetrieben zu werden, um sich ein oder mehrere Male entlang der zweiten Richtung zu bewegen, um das zweite vorgeformte Pulver von dem zweiten Pulvereinlasskanal (112) zu dem zweiten Pulverauslasskanal (114) zu übertragen;
wobei die Pulververteilungseinheit (20) beweglich in dem Formkasten und unterhalb der Zwischenpulverzuführvorrichtung (10) angeordnet ist, wobei die Pulververteilungseinheit (20) einen Abstreifer (23) umfasst, wobei der Abstreifer (23) dazu konfiguriert ist, das erste vorgeformte Pulver oder das zweite vorgeformte Pulver zu glätten.

2. Die Pulververteilungsvorrichtung (1) nach Anspruch 1, wobei die Pulverzuführeinheit (12) eine erste Walze (121a) umfasst, wobei die erste Walze (121a) drehbar in dem ersten Aufnahmeraum (115) aufgenommen ist, wobei die erste Walze (121a) eine erste Aufnahmenut (122a) und eine zweite Aufnahmenut (123a) definiert, wobei die erste Aufnahmenut (122a) und die zweite Aufnahmenut (123a) an einer Umfangsfläche der ersten Walze (121a) ausgebildet sind, wobei die erste Aufnahmenut (122a) dazu konfiguriert ist, das erste vorgeformte Pulver aufzunehmen, wobei die zweite Aufnahmenut (123a) dazu konfiguriert ist, das zweite vorgeformte Pulver aufzunehmen, wobei die erste Walze (121a) ein oder mehrere Male angetrieben wird, um sich entlang der ersten Richtung ein oder mehrere Male zu drehen, um die erste Aufnahmenut (122a) mit dem ersten Pulverauslasskanal (113) in Verbindung zu bringen, um das erste vorgeformte Pulver von dem ersten Pulvereinlasskanal (111) zu dem ersten Pulverauslasskanal (113) zu übertragen, und ein oder mehrere Male angetrieben wird, um sich entlang der zweiten Richtung ein oder mehrere Male zu drehen, um die zweite Aufnahmenut (123a) mit dem zweiten Pulverauslasskanal (114) in Verbindung zu bringen, um das zweite vorgeformte Pulver von dem zweiten Pulvereinlasskanal (112) zu dem zweiten Pulverauslasskanal (114) zu übertragen.

3. Die Pulververteilungsvorrichtung (1) nach Anspruch 1, wobei die Pulverzuführeinheit (12) einen ersten beweglichen Block (121b) umfasst, wobei der erste bewegliche Block (121b) beweglich in dem ersten Aufnahmeraum (115) aufgenommen ist, wobei der erste bewegliche Block (121b) ein erstes Durchgangsloch (122b) und ein zweites Durchgangsloch (123b) definiert, wobei das erste Durchgangsloch (122b) dazu konfiguriert ist, das erste vorgeformte Pulver aufzunehmen, wobei das zweite Durchgangsloch (123b) dazu konfiguriert ist, das zweite vorgeformte Pulver aufzunehmen, wobei der erste bewegliche Block (121b) ein oder mehrere Male angetrieben wird, um sich entlang der ersten Richtung ein oder mehrere Male zu bewegen, um das erste Durchgangsloch (122b) mit dem ersten Pulverauslasskanal (113) in Verbindung zu bringen, um das erste vorgeformte Pulver von dem ersten Pulvereinlasskanal (111) zu dem ersten Pulverauslasskanal (113) zu übertragen, und ein oder mehrere Male angetrieben wird, um sich entlang der zweiten Richtung ein oder mehrere Male zu bewegen, um das zweite Durchgangsloch (123b) mit dem zweiten Pulverauslasskanal (114) in Verbindung zu bringen, um das zweite vorgeformte Pulver von dem zweiten Pulvereinlasskanal (112) zu dem zweiten Pulverauslasskanal (114) zu übertragen.

4. Die Pulververteilungsvorrichtung (1) nach Anspruch 2 oder Anspruch 3, wobei die Pulverzuführeinheit (12) ferner eine Auslöseeinheit umfasst, wobei die Auslöseeinheit an der ersten Walze (121a) oder dem ersten beweglichen Block (121b) befestigt ist, wobei die Auslöseeinheit durch die Pulverzuführbasis (11) hindurchgeht, um außerhalb der Pulverzuführbasis (11) zu sein, wobei die Pulververteilungsvorrichtung (1) ferner eine Begrenzungseinheit (30) umfasst, wobei die Begrenzungseinheit (30) an und oberhalb der Pulververteilungseinheit (20) befestigt ist, wobei die Begrenzungseinheit (30) dazu konfiguriert ist, die Auslöseeinheit auszulösen, um die erste Walze (121a) dazu zu bringen, sich zu drehen, oder den ersten beweglichen Block (121b) dazu zu bringen, sich zu bewegen.

5. Die Pulververteilungsvorrichtung (1) nach Anspruch 4, wobei die Begrenzungseinheit (30) einen Begrenzungsblock (31) und einen drehbaren Zylinder (32) umfasst, wobei der drehbare Zylinder (32) an und oberhalb der Pulververteilungseinheit (20) befestigt ist, wobei der drehbare Zylinder (32) an dem Begrenzungsblock (31) befestigt ist, wobei der drehbare Zylinder (32) dazu konfiguriert ist, den Begrenzungsblock (31) anzutreiben, sich zu drehen, was bewirkt, dass der Begrenzungsblock (31) zwischen einem Auslösezustand und einem nicht ausgelösten Zustand wechselt, wobei der Begrenzungsblock (31) dazu konfiguriert ist, die Auslöseeinheit in dem Auslösezustand auszulösen, und der Begrenzungsblock (31) dazu konfiguriert ist, in dem nicht ausgelösten Zustand von der Auslöseeinheit entfernt zu sein.

6. Die Pulververteilungsvorrichtung (1) nach Anspruch 4, wobei die Zwischenpulverzuführvorrichtung (10) ein Rückstellelement (13) umfasst, wobei ein erstes Ende des Rückstellelements (13) in dem Formkasten befestigt ist und ein zweites Ende des Rückstellelements (13) an der Auslöseeinheit befestigt ist.

7. Die Pulververteilungsvorrichtung (1) nach Anspruch 1, wobei die Pulververteilungseinheit (20) ferner eine Pulververteilungsbasis (21) und eine Pulverzuführeinheit (22) umfasst, wobei die Pulververteilungsbasis (21) beweglich in dem Formkasten angeordnet ist, wobei die Pulververteilungsbasis (21) einen ersten Pulverspeicherkanal (211), einen zweiten Pulverspeicherkanal (212), einen ersten Pulverzuführkanal (213), einen zweiten Pulverzuführkanal (214) und einen zweiten Aufnahmeraum (215) definiert, wobei der erste Pulverspeicherkanal (211) dazu konfiguriert ist, das von dem ersten Pulverauslasskanal (113) herabgefallene erste vorgeformte Pulver zu speichern, der zweite Pulverspeicherkanal (212) dazu konfiguriert ist, das von dem zweiten Pulverauslasskanal (114) herabgefallene zweite vorgeformte Pulver zu speichern, wobei der zweite Aufnahmeraum (215) dazu konfiguriert ist, die Pulverzuführeinheit (22) aufzunehmen, wobei die Pulverzuführeinheit (22) dazu konfiguriert ist, angetrieben zu werden, um sich entlang einer dritten Richtung zu bewegen, um den ersten Pulverspeicherkanal (211) mit dem ersten Pulverzuführkanal (213) in Verbindung zu bringen, und angetrieben zu werden, um sich entlang einer vierten Richtung zu bewegen, um den zweiten Pulverspeicherkanal (212) mit dem zweiten Pulverzuführkanal (214) in Verbindung zu bringen, wobei der Abstreifer (23) an und unterhalb der Pulververteilungsbasis (21) befestigt ist, und sich das von dem ersten Pulverzuführkanal (213) herabgefallene erste vorgeformte Pulver und das von dem zweiten Pulverzuführkanal (214) herabgefallene zweite vorgeformte Pulver jeweils an zwei Seiten des Abstreifers (23) befinden.

8. Die Pulververteilungsvorrichtung (1) nach Anspruch 7, wobei die Pulverzuführeinheit (22) eine zweite Walze (221a) umfasst, wobei die zweite Walze (221a) drehbar in dem zweiten Aufnahmeraum (215) aufgenommen ist, wobei die zweite Walze (221a) einen ersten Kanal (222a) und einen zweiten Kanal (223a) definiert, wobei sich der erste Kanal (222a) und der zweite Kanal (223a) durch eine Umfangsfläche der zweiten Walze (221a) erstrecken, wobei die zweite Walze (221a) dazu konfiguriert ist, angetrieben zu werden, um sich entlang der dritten Richtung zu drehen, um zu bewirken, dass der erste Kanal (222a) mit dem ersten Pulverspeicherkanal (211) und dem ersten Pulverzuführkanal (213) in Verbindung steht, und angetrieben zu werden, um sich entlang der vierten Richtung zu drehen, um zu bewirken, dass der zweite Kanal (223a) mit dem zweiten Pulverspeicherkanal (212) und dem zweiten Pulverzuführkanal (214) in Verbindung steht.

9. Die Pulververteilungsvorrichtung (1) nach Anspruch 7, wobei die Pulverzuführeinheit (22) einen zweiten beweglichen Block (221b) umfasst, wobei der zweite bewegliche Block (221b) beweglich in dem zweiten Aufnahmeraum (215) aufgenommen ist, wobei der zweite bewegliche Block (221b) ein drittes Durchgangsloch (222b) und ein viertes Durchgangsloch (223b) definiert, wobei der zweite bewegliche Block (221b) dazu konfiguriert ist, angetrieben zu werden, um sich entlang der dritten Richtung zu bewegen, um zu bewirken, dass das dritte Durchgangsloch (222b) mit dem ersten Pulverspeicherkanal (211) und dem ersten Pulverzuführkanal (213) in Verbindung steht, und angetrieben zu werden, um sich entlang der vierten Richtung zu bewegen, um zu bewirken, dass das vierte Durchgangsloch (223b) mit dem zweiten Pulverspeicherkanal (212) und dem zweiten Pulverzuführkanal (214) in Verbindung steht.

10. Ein Drucker (100), umfassend einen Laser (2) und eine Pulververteilungsvorrichtung (1) wie in einem der Ansprüche 1-9 beschrieben, wobei der Laser (2) dazu konfiguriert ist, einen Laserstrahl auszugeben, um das erste vorgeformte Pulver und das zweite vorgeformte Pulver zu sintern.

## Revendications

1. Un appareil d'étalement de poudre (1) **caractérisé par**:
l'appareil d'étalement de poudre (1) comprenant une boîte de formage, un dispositif d'alimentation en poudre intermédiaire (10) et une unité d'étalement de poudre (20);
le dispositif d'alimentation en poudre intermédiaire (10) étant fixé dans la boîte de formage, le dispositif d'alimentation en poudre intermédiaire (10) comprenant une base d'alimentation en poudre (11) et une unité d'alimentation en poudre (12), la base d'alimentation en poudre (11) définissant un premier passage d'entrée de poudre (111), un second passage d'entrée de poudre (112), un premier passage de sortie de poudre (113), un second passage de sortie de poudre (114) et un premier espace de réception (115), le premier passage d'entrée de poudre (111) étant configuré pour recevoir une première poudre préformée, le second passage d'entrée de poudre (112) étant espacé du premier passage d'entrée de poudre (111), le second passage d'entrée de poudre (112) étant configuré pour recevoir une seconde poudre préformée, le premier passage de sortie de poudre (113) est configuré pour permettre à la première poudre préformée de tomber de la base d'alimentation en poudre (11), le second passage de sortie de poudre (114) étant espacé du premier passage de sortie de poudre (113), le second passage de sortie de poudre (114) étant configuré pour permettre à la seconde poudre préformée de tomber de la base d'alimentation en poudre (11), le premier espace de réception (115) étant configuré pour recevoir l'unité d'alimentation en poudre (12), l'unité d'alimentation en poudre (12) étant configurée pour être entraînée une ou plusieurs fois pour se déplacer le long de la première direction une ou plusieurs fois afin de transférer la première poudre préformée du premier passage d'entrée de poudre (111) vers le premier passage de sortie de poudre (113), et être entraînée une ou plusieurs fois pour se déplacer le long de la seconde direction une ou plusieurs fois afin de transférer la seconde poudre préformée du second passage d'entrée de poudre (112) vers le second passage de sortie de poudre (114);
l'unité d'étalement de poudre (20) étant agencée de manière mobile dans la boîte de formage et au-dessous du dispositif d'alimentation en poudre intermédiaire (10), l'unité d'étalement de poudre (20) comprenant un racleur (23), le racleur (23) étant configuré pour lisser la première poudre préformée ou la seconde poudre préformée.

2. L'appareil d'étalement de poudre (1) selon la revendication 1, dans lequel l'unité d'alimentation en poudre (12) comprend un premier rouleau (121a), le premier rouleau (121a) est reçu de manière rotative dans le premier espace de réception (115), le premier rouleau (121a) définit une première rainure de réception (122a) et une seconde rainure de réception (123a), la première rainure de réception (122a) et la seconde rainure de réception (123a) sont formées sur une surface périphérique du premier rouleau (121a), la première rainure de réception (122a) est configurée pour recevoir la première poudre préformée, la seconde rainure de réception (123a) est configurée pour recevoir la seconde poudre préformée, le premier rouleau (121a) est entraîné une ou plusieurs fois pour tourner le long de la première direction une ou plusieurs fois pour mettre en communication la première rainure de réception (122a) avec le premier passage de sortie de poudre (113), afin de transférer la première poudre préformée du premier passage d'entrée de poudre (111) vers le premier passage de sortie de poudre (113), et est entraîné une ou plusieurs fois pour tourner le long de la seconde direction une ou plusieurs fois pour mettre en communication la seconde rainure de réception (123a) avec le second passage de sortie de poudre (114), afin de transférer la seconde poudre préformée du second passage d'entrée de poudre (112) vers le second passage de sortie de poudre (114).

3. L'appareil d'étalement de poudre (1) selon la revendication 1, dans lequel l'unité d'alimentation en poudre (12) comprend un premier bloc mobile (121b), le premier bloc mobile (121b) est reçu de manière mobile dans le premier espace de réception (115), le premier bloc mobile (121b) définit un premier trou traversant (122b) et un second trou traversant (123b), le premier trou traversant (122b) est configuré pour recevoir la première poudre préformée, le second trou traversant (123b) est configuré pour recevoir la seconde poudre préformée, le premier bloc mobile (121b) est entraîné une ou plusieurs fois pour se déplacer le long de la première direction une ou plusieurs fois pour mettre en communication le premier trou traversant (122b) avec le premier passage de sortie de poudre (113), afin de transférer la première poudre préformée du premier passage d'entrée de poudre (111) vers le premier passage de sortie de poudre (113), et est entraîné une ou plusieurs fois pour se déplacer le long de la seconde direction une ou plusieurs fois pour mettre en communication le second trou traversant (123b) avec le second passage de sortie de poudre (114), afin de transférer la seconde poudre préformée du second passage d'entrée de poudre (112) vers le second passage de sortie de poudre (114).

4. L'appareil d'étalement de poudre (1) selon la revendication 2 ou la revendication 3, dans lequel l'unité d'alimentation en poudre (12) comprend en outre une unité de déclenchement, l'unité de déclenchement est fixée au premier rouleau (121a) ou au premier bloc mobile (121b), l'unité de déclenchement traverse la base d'alimentation en poudre (11) pour être à l'extérieur de la base d'alimentation en poudre (11), l'appareil d'étalement de poudre (1) comprend en outre une unité de limitation (30), l'unité de limitation (30) est fixée à et au-dessus de l'unité d'étalement de poudre (20), l'unité de limitation (30) est configurée pour déclencher l'unité de déclenchement pour amener le premier rouleau (121a) à tourner ou amener le premier bloc mobile (121b) à se déplacer.

5. L'appareil d'étalement de poudre (1) selon la revendication 4, dans lequel l'unité de limitation (30) comprend un bloc de limitation (31) et un cylindre rotatif (32), le cylindre rotatif (32) est fixé à et au-dessus de l'unité d'étalement de poudre (20), le cylindre rotatif (32) est fixé au bloc de limitation (31), le cylindre rotatif (32) est configuré pour entraîner le bloc de limitation (31) en rotation, amenant le bloc de limitation (31) à passer entre un état de déclenchement et un état non déclenché, le bloc de limitation (31) est configuré pour déclencher l'unité de déclenchement dans l'état de déclenchement, et le bloc de limitation (31) est configuré pour être éloigné de l'unité de déclenchement dans l'état non déclenché.

6. L'appareil d'étalement de poudre (1) selon la revendication 4, dans lequel le dispositif d'alimentation en poudre intermédiaire (10) comprend un élément de rappel (13), une première extrémité de l'élément de rappel (13) est fixée dans la boîte de formage, et une seconde extrémité de l'élément de rappel (13) est fixée à l'unité de déclenchement.

7. L'appareil d'étalement de poudre (1) selon la revendication 1, dans lequel l'unité d'étalement de poudre (20) comprend en outre une base d'étalement de poudre (21) et une unité d'alimentation en poudre (22), la base d'étalement de poudre (21) est agencée de manière mobile dans la boîte de formage, la base d'étalement de poudre (21) définit un premier passage de stockage de poudre (211), un second passage de stockage de poudre (212), un premier passage d'alimentation en poudre (213), un second passage d'alimentation en poudre (214) et un second espace de réception (215), le premier passage de stockage de poudre (211) est configuré pour stocker la première poudre préformée tombée du premier passage de sortie de poudre (113), le second passage de stockage de poudre (212) est configuré pour stocker la seconde poudre préformée tombée du second passage de sortie de poudre (114), le second espace de réception (215) est configuré pour recevoir l'unité d'alimentation en poudre (22), l'unité d'alimentation en poudre (22) est configurée pour être entraînée pour se déplacer le long d'une troisième direction pour mettre en communication le premier passage de stockage de poudre (211) avec le premier passage d'alimentation en poudre (213), et être entraînée pour se déplacer le long d'une quatrième direction pour mettre en communication le second passage de stockage de poudre (212) avec le second passage d'alimentation en poudre (214), où le racleur (23) est fixé à et au-dessous de la base d'étalement de poudre (21), et la première poudre préformée tombée du premier passage d'alimentation en poudre (213) et la seconde poudre préformée tombée du second passage d'alimentation en poudre (214) sont respectivement sur deux côtés du racleur (23).

8. L'appareil d'étalement de poudre (1) selon la revendication 7, dans lequel l'unité d'alimentation en poudre (22) comprend un second rouleau (221a), le second rouleau (221a) est reçu de manière rotative dans le second espace de réception (215), le second rouleau (221a) définit un premier passage (222a) et un second passage (223a), le premier passage (222a) et le second passage (223a) s'étendent à travers une surface périphérique du second rouleau (221a), le second rouleau (221a) est configuré pour être entraîné pour tourner le long de la troisième direction pour amener le premier passage (222a) à communiquer avec le premier passage de stockage de poudre (211) et le premier passage d'alimentation en poudre (213), et être entraîné pour tourner le long de la quatrième direction pour amener le second passage (223a) à communiquer avec le second passage de stockage de poudre (212) et le second passage d'alimentation en poudre (214).

9. L'appareil d'étalement de poudre (1) selon la revendication 7, dans lequel l'unité d'alimentation en poudre (22) comprend un second bloc mobile (221b), le second bloc mobile (221b) est reçu de manière mobile dans le second espace de réception (215), le second bloc mobile (221b) définit un troisième trou traversant (222b) et un quatrième trou traversant (223b), le second bloc mobile (221b) est configuré pour être entraîné pour se déplacer le long de la troisième direction pour amener le troisième trou traversant (222b) à communiquer avec le premier passage de stockage de poudre (211) et le premier passage d'alimentation en poudre (213), et être entraîné pour se déplacer le long de la quatrième direction pour amener le quatrième trou traversant (223b) à communiquer avec le second passage de stockage de poudre (212) et le second passage d'alimentation en poudre (214).

10. Une imprimante (100) comprenant un laser (2) et un appareil d'étalement de poudre (1) tel que décrit dans l'une quelconque des revendications 1 à 9, le laser (2) étant configuré pour émettre un faisceau laser pour fritter la première poudre préformée et la seconde poudre préformée.
